# EUROPEAN PATENT APPLICATION

(11) **EP 4 400 843 A1**
(43) Date of publication of application: **17.07.2024**
(21) Application number: 22867056.8
(22) Date of filing: 30.06.2022
(51) Int. Cl.: G01N 35/00

(54) **AUTOMATED ANALYZING DEVICE, AND CONTROL METHOD FOR SAME**

(30) Priority: 08.09.2021 JP 2021146034
(71) Applicant: HITACHI HIGH-TECH CORPORATION, Tokyo 105-6409 (JP)
(72) Inventor: SHIOHATA, Hirobumi, Tokyo 105-6409 (JP); AKUTSU, Masashi, Tokyo 105-6409 (JP); CHIKAHISA, Masaki, Tokyo 105-6409 (JP)
(74) Representative: Strehl Schübel-Hopf & Partner
(86) International application number: PCT/JP2022/026252
(87) International publication number: WO 2023/037732

(57) **Abstract**

The objective of the present invention is to provide an automated analyzing device which enables an improvement in analysis processing speed. This automated analyzing device is provided with an analysis module for analyzing a sample, and a control unit for controlling the analysis module, characterized in that the control unit controls the analysis module such that, among a plurality of measurement items registered in the analysis module, analysis of a biological sample supplied from a subject is prohibited with respect to measurement items for which calibration or accuracy control measurement is indicated, and analysis of the biological sample is permitted with respect to measurement items for which calibration and accuracy control measurement are not indicated.

## Description

### Technical Field

The present invention relates to an automated analyzing device that analyzes a biological sample such as blood and urine.

### Background Art

In an automated analyzing device that automatically performs qualitative or quantitative analysis on a specific component contained in a biological sample such as blood or urine of a subject, a calibrator or an accuracy control sample having a known concentration is periodically analyzed in order to maintain analysis accuracy. In order to prevent mixture of the calibrator or the accuracy control sample and the biological sample provided by the subject, the biological sample is generally controlled not to be analyzed until analysis of the calibrator or the accuracy control sample is completed.

However, in an automated analyzing device including a plurality of analysis modules, when the biological sample is controlled not to be analyzed even in an analysis module in which analysis of the calibrator or the accuracy control sample is completed and analysis of the biological sample is possible, an analysis processing speed may decrease.

PTL 1 discloses that, in order not to reduce an analysis processing speed of an automated analyzing device, transport of a biological sample to an analysis module to which a calibrator or an accuracy control sample is transported is prohibited, and transport of the biological sample to other analysis modules is permitted.

### Citation List

### Patent Literature

PTL 1: Japanese Patent No. 4919677

### Summary of Invention

### Technical Problem

However, in PTL 1, consideration for a situation is not sufficient where a plurality of measurement items registered in an analysis module provided in an automated analyzing device include a measurement item for which analysis of a calibrator or an accuracy control sample is completed and analysis of a biological sample is possible. That is, even when the analysis of the calibrator or the accuracy control sample is completed, the measurement item registered in the analysis module to which the calibrator or the accuracy control sample is transported is not executed, and the analysis processing speed may decrease.

An object of the invention is to provide an automated analyzing device capable of improving the analysis processing speed.

### Solution to Problem

In order to achieve the above object, the invention provides an automated analyzing device including an analysis module configured to analyze a sample and a control unit configured to control the analysis module. The control unit controls the analysis module to prohibit analysis of a biological sample provided by a subject with respect to a measurement item for which calibration or accuracy control measurement is instructed among a plurality of measurement items registered in the analysis module, and to permit analysis of the biological sample with respect to a measurement item for which calibration or accuracy control measurement is not instructed.

The invention also provides a control method for an automated analyzing device including an analysis module configured to analyze a sample, the control method including: controlling the analysis module to prohibit analysis of a biological sample provided by a subject with respect to a measurement item for which calibration or accuracy control measurement is instructed among a plurality of measurement items registered in the analysis module, and to permit analysis of the biological sample with respect to a measurement item for which calibration or accuracy control measurement is not instructed.

### Advantageous Effects of Invention

According to the invention, it is possible to provide an automated analyzing device capable of improving an analysis processing speed.

### Brief Description of Drawings

[FIG. 1] FIG. 1 is a diagram illustrating a configuration example of an automated analyzing device.
[FIG. 2] FIG. 2 is a diagram illustrating an example of an analysis module table.
[FIG. 3] FIG. 3 is a flowchart illustrating a flow of processing according to embodiment 1.
[FIG. 4] FIG. 4 is a diagram illustrating an example of a sample ID table.
[FIG. 5] FIG. 5 is a flowchart illustrating a part of a flow of processing according to embodiment 1.

### Description of Embodiments

Hereinafter, embodiments of an automated analyzing device according to the invention will be described with reference to the accompanying drawings.

### Embodiment 1

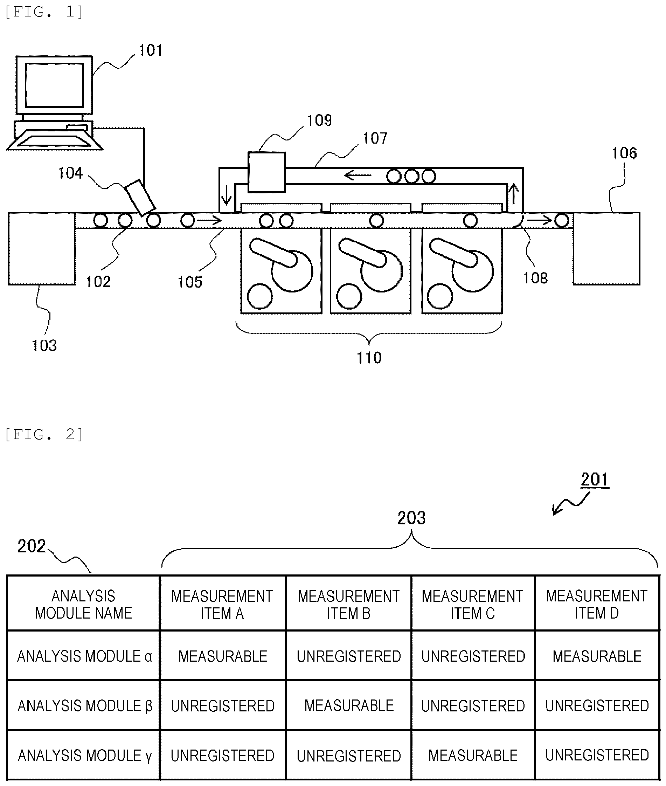

A configuration example of an automated analyzing device will be described with reference to FIG. 1. The automated analyzing device includes an input part 103, an ID reader 104, a transport line 105, three analysis modules 110, a branching part 108, a standby part 109, a discharge part 106, and a control unit 101. The number of analysis modules 110 is not limited to three, and may be one or more. Hereinafter, each component will be described.

A sample container 102 in which a biological sample such as blood or urine provided by a subject and a calibrator or an accuracy control sample that is a sample having a known concentration are contained is input to the input part 103. The sample container 102 may be placed on a dish-shaped carrier and input to the input part 103. Further, the input of the sample container 102 to the input part 103 may be manually performed by a user or may be automatically performed by an external transport system. The sample container 102 input to the input part 103 is transported to the ID reader 104, the analysis module 110, the branching part 108, the standby part 109, and the discharge part 106 by the transport line 105 and a return line 107. The return line 107 is a transport path for transporting the sample container 102 from downstream to upstream of the transport line 105.

The ID reader 104 is a device that reads a sample ID that is an identifier assigned to the sample container 102, and is, for example, a bar code reader or an RFID reader. The sample ID is associated in advance with a reception number or a subject name that is attribute information related to a sample contained in the sample container 102, a measurement requested item that is a requested measurement item, and the like.

The analysis module 110 is a device that dispenses and analyzes the sample contained in the sample container 102 based on the measurement requested item. Since there are a wide variety of measurement items, several measurement items are registered in each of the plurality of analysis modules 110 and stored in the analysis module table 201 illustrated in FIG. 2. The analysis module table 201 has columns of an analysis module name 202 and a measurement item 203, and stores the measurement items registered in each analysis module. In the analysis module table 201 in FIG. 2, a measurement item A and a measurement item D are registered in an analysis module α, a measurement item B is registered in an analysis module β, and a measurement item C is registered in an analysis module γ.

In each of the analysis modules 110, in order to maintain analysis accuracy for the registered measurement item, calibration using a calibrator or accuracy control measurement using an accuracy control sample is periodically performed. When the calibration or the accuracy control measurement is instructed, content stored in the analysis module table 201 is updated to, for example, "calibration in execution". When the calibration or the accuracy control measurement is completed, the measurement item registered in each analysis module becomes a measurable state, and the content stored in the analysis module table 201 is updated to "measurable".

The branching part 108 is provided at a connection part between the transport line 105 and the return line 107, and sets a transport destination of the sample container 102 to either the return line 107 or the discharge part 106 based on an execution status of the measurement requested item associated with the sample ID of the sample container 102. That is, when all the measurement requested items associated with the sample ID are executed, the sample container 102 is transported to the discharge part 106, and when there is an unexecuted measurement requested item, the sample container 102 is transported to the return line 107.

The standby part 109 is provided in the middle of the return line 107, and puts the sample container 102 on standby. When a predetermined condition is satisfied, the sample container 102 put on standby at the standby part 109 is transported to the upstream of the transport line 105.

At the discharge part 106, the sample container 102 on which all the measurement requested items are executed is discharged. The discharge of the sample container 102 from the discharge part 106 may be manually performed by the user or may be automatically performed by an external transport system.

The control unit 101 is a device that controls an operation of each component provided in the automated analyzing device and executes processing related to analysis, and is, for example, a computer.

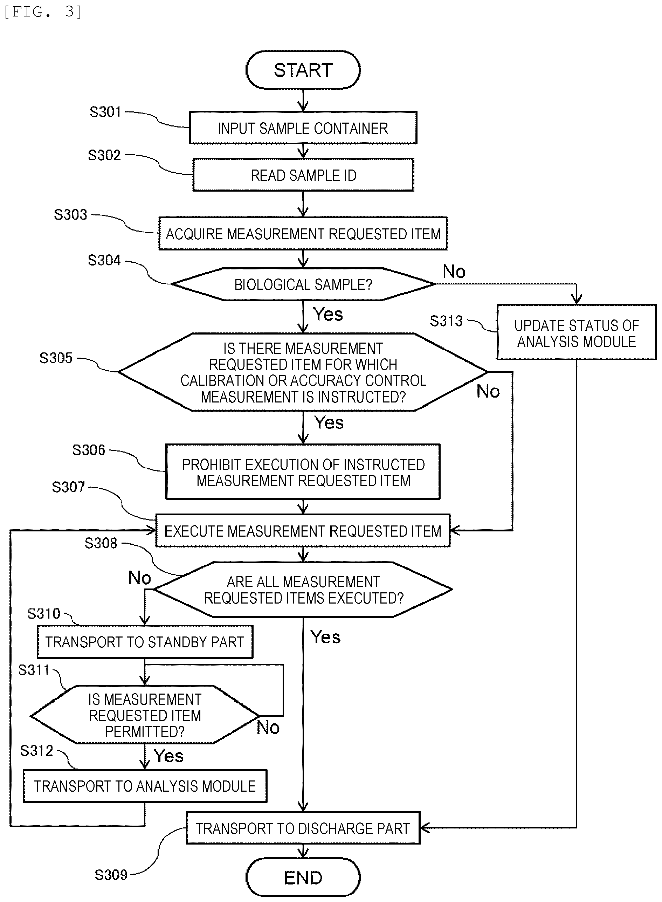

A flow of processing executed in embodiment 1 will be described step by step with reference to FIG. 3.

### (S301)

The sample container 102 in which a biological sample, a calibrator, or an accuracy control sample is contained is input to the input part 103. A sample ID is assigned to the sample container 102. The sample container 102 input to the input part 103 is transported to the ID reader 104 by the transport line 105.

### (S302)

The ID reader 104 reads the sample ID of the sample container 102. The read sample ID is transmitted to the control unit 101.

### (S303)

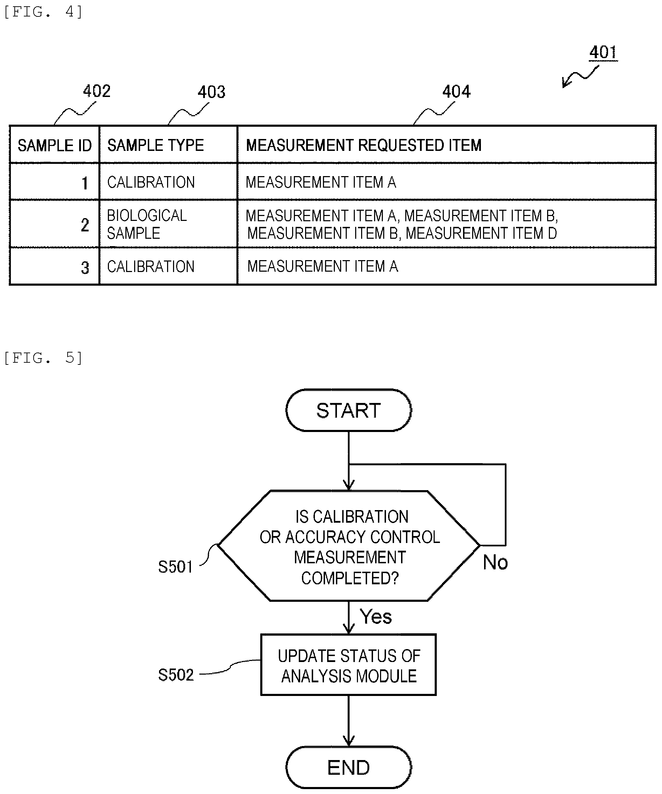

The control unit 101 collates the received sample ID with a sample ID table 401 illustrated in FIG. 4, thereby acquiring a measurement requested item. The sample ID table 401 has columns of a sample ID 402, a sample type 403, and a measurement requested item 404. That is, the sample ID table 401 stores the sample type of the sample contained in the sample container 102 of each sample ID and the measurement item requested for the sample. The sample ID table 401 in FIG. 4 indicates that a calibrator is contained in the sample container 102 having the sample ID of 1 and the measurement item A is requested, and that a biological sample is contained in the sample container 102 having the sample ID of 2 and the measurement items A to D are requested.

### (S304)

The control unit 101 determines whether the sample type is a biological sample. If the sample type is a biological sample, the process proceeds to S305. If the sample type is not a biological sample but a calibrator or an accuracy control sample, the process proceeds to S313, and calibration or accuracy control measurement is instructed to the analysis module 110.

### (S305)

The control unit 101 determines whether there is a measurement requested item, for which calibration or accuracy control measurement is instructed, in the measurement requested item acquired in S303. If there is a measurement requested item for which calibration or accuracy control measurement is instructed, the process proceeds to S306, and if not, the process proceeds to S307. In determining whether there is a measurement requested item for which calibration or accuracy control measurement is instructed, for example, the analysis module table 201 is referred to.

### (S306)

The control unit 101 prohibits execution of the measurement requested item for which calibration or accuracy control measurement is instructed.

### (S307)

The control unit 101 causes the analysis module 110 to execute the measurement requested item. However, the measurement requested item whose execution is prohibited in S306 is not executed. In other words, the measurement requested item whose execution is not prohibited is permitted to be executed.

### (S308)

The control unit 101 determines whether all the measurement requested items of the biological sample are executed. If all the measurement requested items are executed, the process proceeds to S309, and if there is an unexecuted measurement requested item, the process proceeds to S310.

### (S309)

The control unit 101 causes the branching part 108 and the transport line 105 to transport the sample container 102 to the discharge part 106.

### (S310)

The control unit 101 causes the branching part 108 and the return line 107 to transport the sample container 102 to the standby part 109.

### (S311)

The control unit 101 determines whether the measurement requested item whose execution is prohibited in S306 is permitted. If there is a permitted measurement requested item, the process proceeds to S312, and if there is no permitted measurement requested item, processing of S311 is repeated.

### (S312)

The control unit 101 causes the return line 107 and the transport line 105 to transport the sample container 102 to the analysis module 110. Thereafter, the measurement requested item is executed in S307.

### (S313)

The control unit 101 updates a status of the analysis module in response to the instruction for calibration or accuracy control measurement. Specifically, content stored in the analysis module table 201 is updated to, for example, "calibration in execution". The content is updated only for a measurement item for which calibration or accuracy control measurement is instructed. After the update, the process proceeds to S309.

The control unit 101 performs processing in FIG. 5 in parallel with the processing in FIG. 3.

### (S501)

The control unit 101 determines whether the instructed calibration or accuracy control measurement is completed. If the instructed calibration or accuracy control measurement is completed, the process proceeds to S502, and if not, processing of S501 is repeated.

### (S502)

The control unit 101 updates the status of the analysis module in response to completion of the calibration or accuracy control measurement. Specifically, the content stored in the analysis module table 201 is updated to, for example, "measurable". The content is updated only for the measurement item for which calibration or accuracy control measurement is completed.

According to the flow of the processing described above, an analysis processing speed can be improved. That is, only the execution of the measurement item for which the calibration or accuracy control measurement is instructed is prohibited, and the execution of the measurement item for which the calibration or accuracy control measurement is not instructed is permitted, and thus the measurable sample container 102 is analyzed without delay.

In the automated analyzing device including a plurality of analysis modules, the sample containers 102 for which execution of a measurement requested item is prohibited are collectively put on standby at the standby part 109, and thus it is possible to reduce a size of the automated analyzing device without providing, in each of the analysis modules 110, a space for putting the sample containers 102 on standby.

The execution may be permitted for the measurement item whose execution is prohibited in S306 and which has a past measurement result of the calibration or accuracy control measurement. By permitting the execution of the measurement item having a past measurement result, it is possible to quickly analyze the biological sample without waiting for completion of the calibration or accuracy control measurement. However, whether to use the past measurement result of the calibration or accuracy control measurement may be switched by the user via a setting screen of the control unit 101. The control unit 101 may switch whether to use the past measurement result according to priority of the biological sample. For example, in order to quickly obtain a measurement result of a biological sample having high urgency and high priority, the past measurement result may be preferentially used.

The execution of the measurement item, for which the calibration or accuracy control measurement is not instructed and which has no measurement result of the calibration or accuracy control measurement, may be prohibited. By prohibiting the execution of the measurement item having no measurement result of the calibration or accuracy control measurement, it is possible to prevent execution of erroneous analysis.

The embodiment of the invention has been described above. The invention is not limited to the above-described embodiment, and the components may be modified without departing from the gist of the invention. The plurality of components disclosed in the above-described embodiment may be combined as appropriate. Further, some components may be deleted from all the components shown in the above-described embodiment.

### Reference Signs List

- 101:: control unit
- 102:: sample container
- 103:: input part
- 104:: ID reader
- 105:: transport line
- 106:: discharge part
- 107:: return Line
- 108:: branching part
- 109:: standby part
- 110:: analysis module
- 201:: analysis module table
- 202:: analysis module name
- 203:: measurement item
- 401:: sample ID table
- 402:: sample ID
- 403:: sample type
- 404:: measurement requested item

## Claims

1. An automated analyzing device comprising:
an analysis module configured to analyze a sample; and
a control unit configured to control the analysis module, wherein
the control unit controls the analysis module to prohibit analysis of a biological sample provided by a subject with respect to a measurement item for which calibration or accuracy control measurement is instructed among a plurality of measurement items registered in the analysis module, and to permit analysis of the biological sample with respect to a measurement item for which calibration or accuracy control measurement is not instructed.

2. The automated analyzing device according to claim 1, wherein
the control unit puts the biological sample, for which analysis is prohibited, on standby in a standby part.

3. The automated analyzing device according to claim 2, wherein
when the calibration or the accuracy control measurement is completed, the control unit causes the biological sample, for which analysis is prohibited, to be transported from the standby part to the analysis module.

4. The automated analyzing device according to claim 1, wherein
the control unit controls the analysis module to permit analysis of the biological sample with respect to a measurement item for which the calibration or the accuracy control measurement is instructed and which has a past measurement result of the calibration or the accuracy control measurement.

5. The automated analyzing device according to claim 1, wherein
the control unit controls the analysis module to prohibit analysis of the biological sample with respect to a measurement item for which the calibration or the accuracy control measurement is not instructed and which has no measurement result of the calibration or the accuracy control measurement.

6. A control method for an automated analyzing device including an analysis module configured to analyze a sample, the control method comprising:
controlling the analysis module to prohibit analysis of a biological sample provided by a subject with respect to a measurement item for which calibration or accuracy control measurement is instructed among a plurality of measurement items registered in the analysis module, and to permit analysis of the biological sample with respect to a measurement item for which calibration or accuracy control measurement is not instructed.
